(19) Europäisches Patentamt / European Patent Office / Office européen des brevets

(11) **EP 3 591 256 A1**

(12) **DEMANDE DE BREVET EUROPEEN**

(43) Date de publication:
08.01.2020 Bulletin 2020/02

(51) Int Cl.:
*F16F 7/108* *(2006.01)*

(21) Numéro de dépôt: **19183585.9**

(22) Date de dépôt: **01.07.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **05.07.2018 FR 1856172**

(71) Demandeur: **RENAULT s.a.s.**
**92100 Boulogne-Billancourt (FR)**

(72) Inventeurs:
• **ZHANG, Charles**
**78280 GUYANCOURT (FR)**
• **THEVENARD, Christophe**
**27100 ECAUVILLE (FR)**

(54) **DISPOSITIF D'AMORTISSEMENT DE VIBRATIONS D'UN COMPOSANT MÉCANIQUE**

(57) L'invention concerne un dispositif d'amortissement de vibrations d'un composant mécanique (6) comprenant une masse (1) et un élément élastique (2) comportant une première extrémité solidaire d'une première face de la masse (1). Le dispositif comprend notamment :
- une plaque (5) fixée à une deuxième extrémité de l'élément élastique (2) ;
- une première paroi (4) fixée perpendiculairement à ladite plaque (5) ;
- un premier élément visqueux (3) fixé d'une part à ladite première paroi (4) et d'autre part à une première face de la masse (1) parallèle à ladite première paroi (4).

Fig. 1

EP 3 591 256 A1

**Description**

DOMAINE TECHNIQUE DE L'INVENTION

La présente invention concerne un dispositif d'amortissement de vibrations d'un composant mécanique, comprenant une masse et un élément élastique comportant une première extrémité solidaire d'une première face de la masse.

La réduction des vibrations de la structure et des composants mécaniques, notamment d'un véhicule automobile, est un combat permanent afin d'améliorer le confort acoustique et vibratoire. Les solutions classiques anti vibratoire sont souvent très lourdes, ce qui est à contre-sens des exigences d'allégement.

L'industrie automobile cherche constamment des solutions plus efficaces et moins lourdes.

ÉTAT DE LA TECHNIQUE

Le document EP0844075 divulgue une protection acoustique pour véhicule, appliquée à un vitrage feuilleté qui constitue un élément sans mouvement relatif par rapport au véhicule. Ce document propose par exemple des produits de la firme 3M sous forme de film qui procure un amortissement des vibrations transmises par voie solidienne.

Pour un composant mécanique comportant un mouvement relatif possible par rapport au véhicule, comme par exemple un moteur, un compresseur de climatisation ou un tube dans lequel circule un fluide, l'amplitude vibratoire est souvent excessive à sa fréquence de résonnance $f_0$. Afin de diminuer l'amplitude vibratoire à $f_0$, on ajoute un batteur calé à la même fréquence de résonnance $f_0$ calculée par le rapport raideur/masse

$$f_0 = \frac{1}{2\pi}\sqrt{\frac{K}{M}}$$

où M est la masse et K est la raideur du système masse ressort constitué par le batteur. On peut constater que l'amplitude vibratoire à $f_0$ est sensiblement réduite. Cette solution présente plusieurs inconvénients.

Le document FR2755198 divulgue un atténuateur de vibrations pour véhicule automobile relié à la structure du véhicule par des liaisons frangibles. Un batteur comporte une masse qui coopère avec un socle par des moyens de solidarisation aptes à libérer la masse au-delà d'un seuil prédéterminé de décélération du véhicule.

Le document FR2829972 divulgue un dispositif d'amortissement de vibration d'un composant mécanique qui est une ligne d'échappement de véhicule automobile. Un batteur inertiel est fixé au tuyau d'échappement à l'endroit du support d'échappement.

Un batteur classique fonctionne à une seule fréquence, sa fréquence de résonance propre. En revanche, la structure automobile ou un composant mécanique, est souvent multi-résonnances système. L'application du batteur classique est donc assez limitée en termes d'amélioration acoustique de l'automobile.

Par ailleurs, l'application du batteur classique peut créer deux contre-bosses dans le spectre de fréquences sonores, ce qui peut générer des effets secondaires.

L'invention consiste à proposer un dispositif d'amortissement qui permet de diminuer l'amplitude vibratoire d'un composant mécanique massif à large bande de fréquences.

BREF RESUME DE L'INVENTION

Pour améliorer l'état antérieur de la technique, l'invention a pour objet un dispositif d'amortissement de vibrations d'un composant mécanique, comprenant une masse et un élément élastique comportant une première extrémité solidaire d'une première face de la masse, remarquable en ce qu'il comprend :

- une plaque fixée à une deuxième extrémité de l'élément élastique ;
- une première paroi fixée perpendiculairement à la plaque ;
- un premier élément visqueux fixé d'une part à la première paroi et d'autre part à une première face de la masse parallèle à la première paroi.

Particulièrement, le dispositif d'amortissement comprend :

- au moins une deuxième paroi fixée perpendiculairement à la plaque ;
- au moins un deuxième élément visqueux fixé d'une part à la deuxième paroi et d'autre part à une deuxième face de la masse parallèle à la deuxième paroi.

De préférence, la plaque comprend au moins un élément de fixation au composant mécanique à amortir.

Avantageusement, au moins un élément visqueux comporte un matériau à faible rigidité correspondant à un module d'Young E<20000 N/mm$^2$ et à fort facteur de perte supérieur à 0,7.

Particulièrement, le matériau appartient à la famille des matériaux acryliques.

Avantageusement aussi, au moins un élément visqueux a une épaisseur comprise entre 2 mm et 8 mm.

Avantageusement encore, l'élément élastique comporte un matériau polymère.

Particulièrement, au moins un élément visqueux est fixé par collage.

Alternativement, la plaque forme avec la ou les parois une boîte dans laquelle est injecté l'élément visqueux entre la masse et la ou les parois.

Plus particulièrement, la plaque et la ou les parois sont constituées de tôles d'acier d'épaisseur comprise entre 1,5 mm et 3,5 mm.

BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :

- la figure 1 est une vue de côté en coupe partielle d'un premier mode de réalisation de l'invention ;
- la figure 2 est une vue de dessus d'un deuxième mode de réalisation de l'invention ;
- la figure 3 est une vue de côté en coupe du deuxième mode de réalisation de l'invention.

DESCRIPTION DETAILLEE DES FIGURES

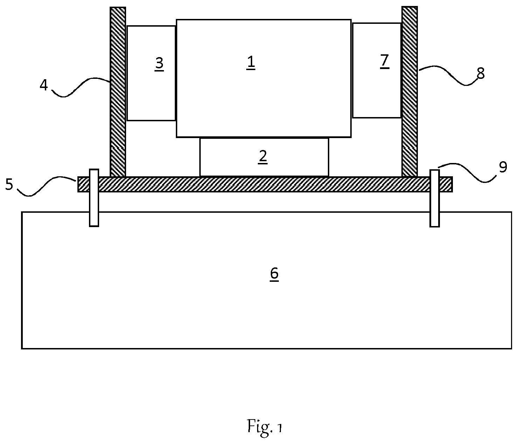

Selon un premier mode de réalisation, le dispositif d'amortissement de vibrations d'un composant mécanique 6, illustré par la figure 1, comprend une masse 1 et un élément élastique 2, de manière comparable à un batteur classique. On peut réaliser de différentes manières l'élément élastique 2 qui comporte une première extrémité solidaire d'une première face de la masse Par exemple, l'élément élastique 2 est un ressort métallique.

De préférence l'élément élastique 2 comporte un matériau polymère comme par exemple le caoutchouc ou tout autre élastomère.

Une plaque 5 fixée à une deuxième extrémité de l'élément élastique 2, constituée d'une tôle d'acier d'épaisseur proche de 3 mm, comprend un ou plusieurs éléments de fixation au composant mécanique 6 à amortir, comme par exemple des vis 9.

Un élément visqueux 3 est fixé d'une part à une première paroi 4 fixée perpendiculairement à la plaque 5, et d'autre part à une face de la masse 1 parallèle à la première paroi 4.

L'élément visqueux 3 comporte un matériau à faible rigidité correspondant à un module d'Young $E<20000$ N/mm$^2$ ($E<20$ GPa) et à fort facteur de perte supérieur à 0,7. Dans la famille des matériaux acryliques, le poly méthacrylate de méthyle (PMMA) a par exemple un module d'Young de 2,38 GPa avec un facteur de perte variant de 0,8 à 0,6 pour une fréquence variant de 10 Hz à 500 Hz. Pour conserver un facteur de perte élevé à haute fréquence, un élastomère brut en zone de transition vitreuse ou zone viscoélastique, dans le domaine des températures ambiantes, présente un module d'Young qui peut descendre de 3 GPa à 3 MPa avec un coefficient de perte qui peut atteindre 2,0.

L'élément visqueux 3 est collé d'un côté avec la masse 1 et de l'autre côté avec la paroi 4. Le mouvement relatif entre la masse 1 et la paroi 4 génère le cisaillement du matériau de l'élément visqueux 3. Il est important de noter que le matériau visqueux 3 ne supporte aucune charge mécanique. Son seul rôle est d'absorber l'énergie par sa déformation en cisaillement. L'épaisseur de l'élément visqueux 3 est sélectionnée dans une plage d'épaisseurs comprises entre 2mm et 8mm en fonction du problème à traiter. La paroi 4 est soudée perpendiculairement à la plaque horizontale 5. Le rôle de la plaque 5 sensiblement horizontale est de servir de support de fixation avec le composant mécanique 6 à amortir.

Pour un batteur classique, le système masse-ressort a une fréquence de résonnance à $f_0$. Pour notre invention, la présence du matériau visqueux de l'élément visqueux 3, transforme la fréquence de résonnance en fréquence de coupure. A partir de cette fréquence, le mouvement de la masse 1 commence à se déphaser avec celui de la paroi verticale 4. Le mouvement relatif de la masse 1 est en opposition de phase par rapport à la paroi 4, générant ainsi une déformation de cisaillement du matériau visqueux de l'élément 3. On définit la fréquence $f'_0$ comme fréquence effective. A partir de $f'_0$, le déphasage cinétique entre masse 1 et paroi 4 devient supérieur à 90°, ce qui assure une déformation en cisaillement du matériau 3 suffisante pour absorber l'énergie vibratoire du composant mécanique 6. La fréquence $f'_0$ dépend non seulement de $f_0$ mais également des caractéristiques du matériau visqueux 3.

Pour amplifier l'amortissement en fréquence, on peut ajouter une deuxième paroi 8 fixée perpendiculairement à la plaque 5 de manière comparable à la paroi 4, par exemple à l'opposé de la paroi 4 par rapport à la masse 1, voire d'autres parois supplémentaires entre les parois 4 et 8. Un ou plusieurs deuxièmes éléments visqueux 7 est ou sont fixés d'une part à la deuxième paroi 8, voire à chaque paroi supplémentaire, et d'autre part à une ou plusieurs deuxièmes faces de la masse 1 parallèles à la deuxième paroi 8, voire à chaque paroi supplémentaire.

L'avantage majeur de l'invention tient à ce qu'elle permet de réduire l'amplitude de vibrations d'un composant mécanique massif en large bande de fréquences sans contre-bosse dans le spectre de fréquences comme c'est le cas d'autres solutions classiques. On a observé un gain en vibratoire d'un berceau de véhicule automobile de 2 à 3 dB sur un spectre de fréquences allant de 25 Hz à 500 Hz.

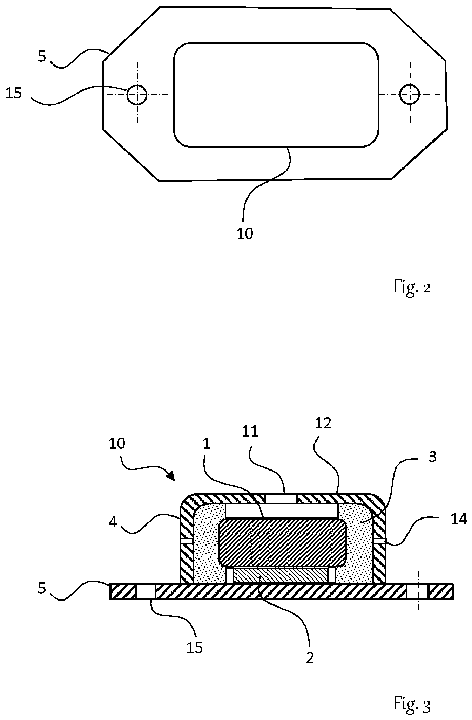

La figure 2 montre en vue de dessus et la figure 3 montre une vue de côté en coupe d'un deuxième mode de réalisation du dispositif d'amortissement.

La paroi 4 entoure ici la masse 1, perpendiculairement à la plaque 5 à laquelle elle est fixée par exemple de manière comparable au premier mode de réalisation. Un couvercle 12 au sommet de la paroi 4 forme une boîte 10 qui enchâsse la masse 1 reliée à la plaque 10 par l'élément élastique 2.

On peut aussi réaliser la boîte 10 par emboutissage d'une tôle d'acier de 2 mm d'épaisseur de manière à obtenir une cuvette dont le fond après renversement, constitue le couvercle 12 et dont les bords perpendiculaires au fond, constituent la paroi 4.

On perce la plaque 5, constituée par exemple d'une tôle d'acier de 3 mm d'épaisseur, de deux trous 15 permettant chacun le passage d'une vis en vue de sa fixation sur le composant mécanique à amortir.

On colle l'élément élastique 2, constitué par exemple d'une pastille de caoutchouc ou autre élastomère d'épaisseur 4 mm, sur la plaque 5.

On colle ensuite la masse 1, constituée par exemple d'un volume massif d'acier adapté au problème traité, sur la face opposée l'élément élastique 2.

On perce une ou plusieurs ouverture 14 dans la partie verticale de la paroi 4 de type cylindrique et une ouverture dans la partie horizontale formant couvercle 12.

On soude ensuite la plaque 5 sur le pourtour de la paroi 4 opposé à la partie formant couvercle 12, de manière à fermer la boîte 10.

On injecte enfin l'élément visqueux entre la masse 1 et la ou les parois 4, 8 par la ou les ouvertures 14 en comprimant ou chassant l'air contenue dans la boîte 10 par l'ouverture 11, de façon à faire venir épouser la ou les paroi 4, 8 et la ou les faces verticales de la masse 1 par l'élément visqueux 3 sans nécessiter de processus de collage supplémentaire.

Sur les figures 2 et 3, la masse 1 peut avoir plusieurs faces verticales si elle est parallélépipédique ou une seule face verticale si elle est cylindrique.

On peut choisir d'autres épaisseurs de tôle que celles-ci-dessus proposées pour la plaque 5 et la ou les parois 4, 8, par exemple dans une panel de tôles d'acier d'épaisseur comprise entre 1,5 mm et 3,5 mm.

## Revendications

**1.** Dispositif d'amortissement de vibrations d'un composant mécanique (6) comprenant une masse (1) et un élément élastique (2) comportant une première extrémité solidaire d'une première face de la masse (1), **caractérisé en ce qu'**il comprend :

- une plaque (5) fixée à une deuxième extrémité de l'élément élastique (2) ;
- une première paroi (4) fixée perpendiculairement à ladite plaque (5) ;
- un premier élément visqueux (3) fixé d'une part à ladite première paroi (4) et d'autre part à une première face de la masse (1) parallèle à ladite première paroi (4).

**2.** Dispositif d'amortissement selon la revendication 1, **caractérisé en ce qu'**il comprend :

- au moins une deuxième paroi (8) fixée perpendiculairement à ladite plaque (5) ;
- au moins un deuxième élément visqueux (7) fixé d'une part à ladite deuxième paroi (8) et d'autre part à une deuxième face de la masse (1) parallèle à ladite deuxième paroi (8).

**3.** Dispositif d'amortissement selon l'une des revendications précédentes, **caractérisé en ce que** ladite plaque (5) comprend au moins un élément de fixation (9) au composant mécanique (6) à amortir.

**4.** Dispositif d'amortissement selon l'une des revendications précédentes, **caractérisé en ce qu'**au moins un élément visqueux (3, 7) comporte un matériau à faible rigidité correspondant à un module d'Young $E < 20000$ $N/mm^2$ et à fort facteur de perte supérieur à 0,7.

**5.** Dispositif d'amortissement selon la revendication précédente, **caractérisé en ce que** ledit matériau appartient à la famille des matériaux acryliques.

**6.** Dispositif d'amortissement selon l'une des revendications précédentes, **caractérisé en ce qu'**au moins un élément visqueux (3, 7) a une épaisseur comprise entre 2 mm et 8 mm.

**7.** Dispositif d'amortissement selon l'une des revendications précédentes, **caractérisé en ce que** l'élément élastique (2) comporte un matériau polymère.

**8.** Dispositif d'amortissement selon l'une des revendications précédentes, **caractérisé en ce qu'**au moins un élément visqueux (3, 7) est fixé par collage.

**9.** Dispositif d'amortissement selon l'une des revendications 1 à 7, **caractérisé en ce que** la plaque (5) forme avec la ou les parois (4, 8) une boîte (10) dans laquelle est injecté l'élément visqueux entre la masse (1) et la ou les parois (4, 8).

**10.** Dispositif d'amortissement selon l'une des revendications précédentes, **caractérisé en ce que** la plaque (5) et la ou les parois (4, 8) sont constituées de tôles d'acier d'épaisseur comprise entre 1,5 mm et 3,5 mm.

Fig. 1

Fig. 2

Fig. 3

Europäisches
Patentamt

European
Patent Office

Office européen
des brevets

## RAPPORT DE RECHERCHE EUROPEENNE

Numéro de la demande

EP 19 18 3585

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 937 068 A (PHILIPS NV) 6 août 1948 (1948-08-06) * le document en entier * ----- | 1-10 | INV. F16F7/108 |
| X | EP 3 020 863 A1 (QINGDAO CREATE ENVIRONMENT CONTROL TECHNOLOGY CO L [CN]; 3RD RAILWAY S) 18 mai 2016 (2016-05-18) * colonne 31 - colonne 42; figures 5-8 * * colonne 49 - colonne 53; figures 12,13 * * colonne 86; figure 31 * ----- | 1-5,7 | |

DOMAINES TECHNIQUES RECHERCHES (IPC)

F16F

Le présent rapport a été établi pour toutes les revendications

| Lieu de la recherche | Date d'achèvement de la recherche | Examinateur |
|---|---|---|
| La Haye | 18 octobre 2019 | Kramer, Pieter Jan |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 18 3585

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-10-2019

| Document brevet cité au rapport de recherche | | Date de publication | Membre(s) de la famille de brevet(s) | | Date de publication |
|---|---|---|---|---|---|
| FR 937068 | A | 06-08-1948 | AUCUN | | |
| EP 3020863 | A1 | 18-05-2016 | CN | 103343496 A | 09-10-2013 |
| | | | EP | 3020863 A1 | 18-05-2016 |
| | | | HK | 1221269 A1 | 26-05-2017 |
| | | | US | 2016298300 A1 | 13-10-2016 |
| | | | WO | 2015003634 A1 | 15-01-2015 |

EPO FORM P0460

Pour tout renseignement concernant cette annexe : voir Journal Officiel de l'Office européen des brevets, No.12/82

**EP 3 591 256 A1**

**RÉFÉRENCES CITÉES DANS LA DESCRIPTION**

**Documents brevets cités dans la description**

- EP 0844075 A
- FR 2755198
- FR 2829972